# EUROPEAN PATENT SPECIFICATION

(11) **EP 1 643 777 B1**
(45) Date of publication and mention of the grant of the patent: **17.06.2009**
(21) Application number: 04300652.7
(22) Date of filing: 04.10.2004
(51) Int. Cl.: H04Q 3/00

(54) **Methods and apparatus for controlling signalling gateways**
Verfahren und Vorrichtung zur Steuerung von Signallisierungsdurchgangssystemen
Procédés et dispositif pour contrôler des passerelles de signalisation

(43) Date of publication of application: 05.04.2006
(73) Proprietor: HEWLETT-PACKARD DEVELOPMENT COMPANY, L.P., Houston, TX 77070 (US)
(72) Inventor: Bouckaert, Philippe, HP Centre de Comp. France, 06410 Biot (FR); Garnero, Pierre, HP Centre de Compétences France, 06130 Grasse (FR); Troadec, Hervée HP Centre de Compétences France, 06220 Le Golf de Juan (FR)
(74) Representative: Lloyd, Richard Graham

(56) References cited:
- EP-A- 1 377 082
- US-A1- 2003 083 078

## Description

### BACKGROUND OF THE INVENTION

### Field of the Invention

The invention relates to methods, and related apparatus, for controlling processing entities used, for instance, in communication systems such as for the control of signalling traffic between a signalling gateway and a plurality of application server processes.

### Background Art

Establishing connections between two telephones involves a complex interaction of digital messages, hereinafter referred to generally as signalling. Nowadays telephone systems perform what is known as "out-of-band" signalling. Out-of-band signalling means that the communications required between the switches and other equipment in the network take place on communication channels other than the channel by which the voice or data flows. Typically, the out-of-band signalling takes place by means of digital communication channels. Thus, the public switched telephone network (PSTN) generally uses two types of channels, media and signalling.

Several protocols have been defined for out-of-band signalling. The most commonly used protocol, in North America, Asia and Europe, is known as Signalling System No. 7 (SS7). However, the SS7 protocol defines more than just a protocol for communication between switches. It also defines an entire switching network for facilitating signalling for call establishment, routing, and information exchange functions of switched circuit networks.

Since the amount of data transferred over data networks is now much larger than the voice traffic that is carried over the PSTN, carriers are in the process of consolidating both types of networks. In addition, telecommunication networks are increasingly making use of standard computing hardware in order to reduce IT costs.

Therefore, there is a trend in the telephone industry to migrate telephone systems using SS7-based networks for signalling to Internet Protocol (IP) networks. The Internet protocols are standardised by the Internet Engineering Task Force (IETF). Moving either or both of the media and signalling channels to an IP infrastructure involves the use of very different technologies and can be done independently. The SIGTRAN IETF working group is currently in the process of defining the protocols for back-hauling SS7 signalling messages across IP networks. Generally speaking, signalling across an IP network involves replacing the lower levels of the SS7 layered protocol communications and transport layers with IP network protocol communications and transport layers.

The SIGTRAN group have taken the initiative to define open standards for transporting SS7 over IP networks. With SIGTRAN technology, telephone services which today lie on top of SS7 networks, can run Application Servers (ASs) lying on top of IP networks. The interworking with SS7 networks is performed by SIGTRAN signalling gateways (SGs).

To enhance the availability of the signalling gateway, it can be distributed over several processes running in one or several computers, each of them being a Signalling Gateway Process (SGP). Every SGP belonging to a particular SG has the same SS7 point code (or the same list of PCs), with each SGP generally being connected to the SS7 network through redundant links that are selected in conventional manner via Signalling Link Selector (SLS) values present in the SS7 messages.

On the IP network side, each SGP is connected to the ASPs running the services. Each AS, which can typically be identified with a single logical service, such as a Short Message Service Centre (SMSC), can also be implemented in a distributed manner by one or more processes or computers - referred to as the ASPs. To provide improved reliability, each SGP is typically directly connected to each ASP through a Stream Control Transfer Protocol (SCTP) association such that there is one association between each SGP and each ASP.

Such a system is described, for instance in EP-1377082-A1, which discloses a proxy load balancer coupled between a signalling gateway and application server processes running application services.

As is well known, the Short Message Service (SMS) enables mobile subscribers to easily send and receive text messages via a wireless handset. The SMS delivery service provides a mechanism for transmitting such short messages to and from SMS-capable terminals (e.g., wireless handsets, personal computers, etc.) via the signalling component of the wireless communication network. A Short Message Service Center (SMSC) functions as a store and forward platform for short messages so that if a temporary network failure prohibits the immediate delivery of an SMS message, then the short message is stored in the network (i.e., at an SMSC) until the destination becomes available.

However, as the popularity of mobile telephones rises, SMS messaging is becoming widely used as an advertising vehicle. As such, SMS users are increasingly finding themselves receiving unwanted SMS messages, often referred to as "spam" or "junk" messages. From a network operations perspective, large volumes of spam SMS messaging traffic has the potential to impact overall network performance. In consequence, various techniques are being developed and deployed to prevent the delivery of unwanted SMS messages to a mobile subscriber and to eliminate such unwanted SMS message traffic from an operator's network to conserve network resources.

US 2003/0083078-A1 describes a signaling message processing and routing node that transmits and receives short message service (SMS) data packets via a communications network. The routing node includes an SMS message discrimination module that determines whether an unwanted or spam SMS message is being sent to a receiving or called party.

The present invention is directed to facilitating the filtering of message traffic where the traffic is backhauled to an IP-based application server, such as an IP-based SMSC.

### SUMMARY OF THE INVENTION

In brief, the present invention provides a facility whereby additional message related information may be made available to an application server to enable unwanted messages to be identified, or messages to be otherwise discriminated.

One issue that arises with eliminating unwanted messages is that of spoofing, in other words, a message may contain false information designed to hide the message's true origin. For this reason it is often necessary to inspect a range of information concerning the message in order to determine whether or not it is an unwanted message. However, the standard SIGTRAN xUA protocols do not normally provide to the application servers all the information they have available regarding particular messages. In particular, routing information is normally not needed by the AS, and is thus not transported inside the xUA protocols.

However, such routing information may be exploited to discriminate messages within the AS. For instance, an anti-spoofing criteria may be to check the calling party address of the message received against the linkset ID reflecting the linkset upon which the message was received at the gateway. The global title of the calling party address may, for instance identify the network operator through the first gtai digits, and this information must be consistent with the SS7 interface, characterised by a linkset ID, provided to this operator. To be able to check this criteria, for instance, the Application Server would need access to this routing information.

Methods are thus provided as set out in claims 1 to 4.

Other aspects of the invention provide a signalling gateway as set out in claim 5 and a system for identifying unwanted SMS messages as set out in claim 6.

### BRIEF DESCRIPTION OF THE DRAWINGS

An embodiment of the invention will now be described, by way of example only, with reference to the accompanying drawings in which:
Figure 1 shows the general configuration of a signalling gateway;
Figures 2a and 2b illustrate the layered protocol communications schemes of a Signalling End Point, a Signalling Gateway Process and an Application Server Process;
Figure 3 illustrates an exemplary SS7 topology;
Figure 4 shows an exemplary sequence of events and signalling network management message exchanges.

### DETAILED DESCRIPTION OF THE PREFERRED EMBODIMENTS

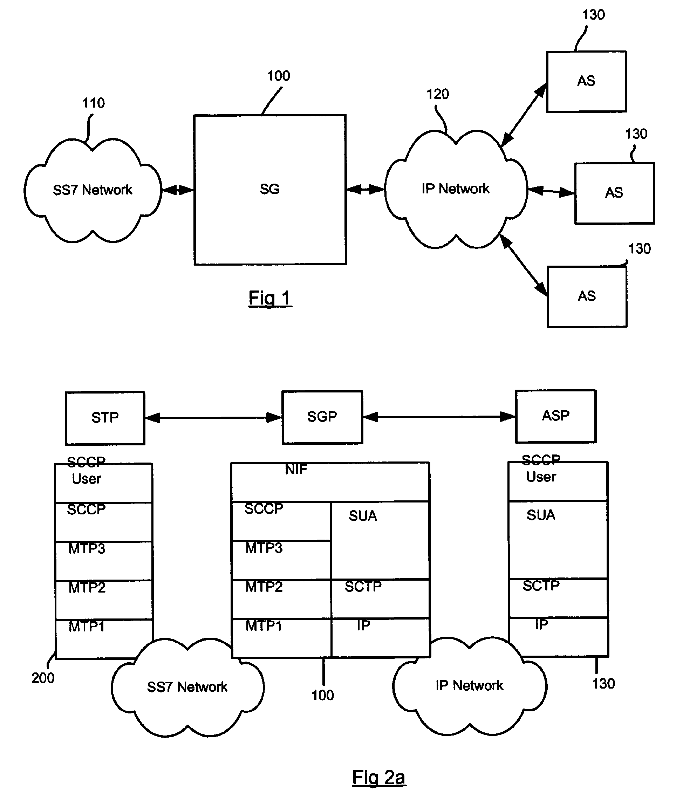

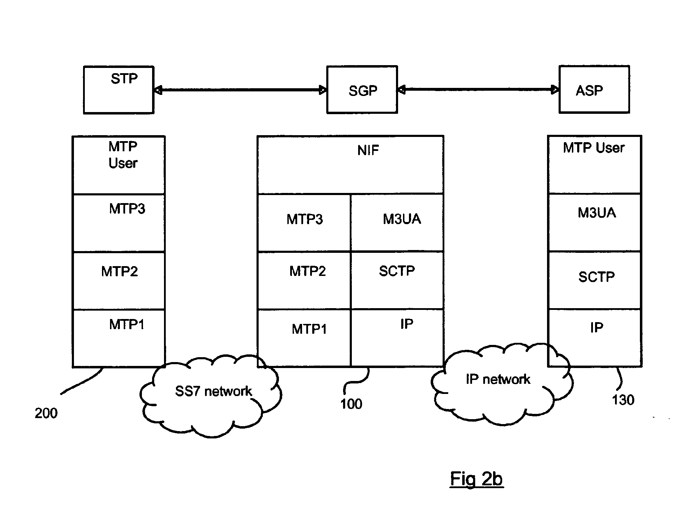

Figure 1 shows the general configuration of a signalling gateway 100 interconnecting an SS7 network 110 and a series of Application Servers (ASs) 130 via an IP Network 120. Figures 2a and 2b illustrate the layered protocol communications architecture of the various components.

SS7 Signal Transfer Point (STP) or Signal End Point (SEP) 200 includes the MTP1, MTP2, MTP3, SCCP and SCCP user part layers. As is known in the prior art, a Signal Transfer Point (STP) or Signal End Point (SEP) 200 routes SS7 signalling within the SS7 network and manages various signalling links which comprise the SS7 network. Routing is accomplished by processing of the routing label of an SS7 message by the Message Transfer Part (MTP) functionality. The MTP layers comprise three levels. Levels 1 and 2 are used for the transfer of SS7 messages from one point to another over an individual signalling link. Level 3 is used for the transfer of SS7 messages over the SS7 network beyond the requirements of individual link transmission. The MTP3 layer is mainly dedicated to ensuring the delivery of incoming and outgoing messages (such as discrimination, distribution and routing), and the network reconfiguration (such as traffic management, route management and link management).

Communication between Signalling Gateway Processes (SGPs) of the SG 100 and Application Server Processes (ASPs) within the ASs 130 is carried out using a transport layer defined by the SIGTRAN working group and referred to as SCTP (Stream Control Transfer Protocol) which is defined in RFC 2960. Signalling Gateway 100 terminates the MTP1, MTP2, MTP3 and SCCP layers and includes a Nodal Interworking function (NIF) as well as SUA, SCTP and IP layers. Each AS 130 includes IP, SCTP, SUA and SCCP user layers. Signalling Gateway 100 thus terminates the SS7 lower layers and encapsulates their payload data into SCTP messages to send them to an Application Server 130. The AS terminates the SCTP layers, processes the signalling messages and replies to the SG 100 in the same way. In the case of SS7 and M3UA interworking, the M3UA adaptation layer is designed to provide an extension of the MTP3 layer as shown in Fig 2b. In this document,, the SUA and M3UA layers are referred to as xUA layers.

These architectures are well known to those skilled in the relevant art and are described in the SIGTRAN documents, referred to above.

The M3UA and SUA standards define the sets of messages exchanged between the xUA layers including management messages, transfer messages, signalling network management messages, state maintenance messages and traffic maintenance messages.

Of the traffic management messages, the *ASP-ACTIVE* message is sent by an ASP to indicate to a remote xUA peer that it is ready to process signalling traffic for a particular Application Server. The *ASP-ACTIVE* message affects only the ASP state for the Routing Keys identified by the Routing Contexts, if present.

### The ASP-ACTIVE message contains the following parameters:

- Traffic Mode Type: Optional
- Routing Context: Optional
- INFO String: Optional

An *ASP-ACTIVE_ACK* message is used by the SG 100 to acknowledge an *ASP-ACTIVE* message received from a remote xUA peer.

### The ASP-ACTIVE_ACK message contains the following parameters:

- Traffic Mode Type: Optional
- Routing Context: Optional
- INFO String: Optional

In both cases, the optional INFO String parameter is defined so as to be able to carry any meaningful UTF-8 character string along with the message. The length of the INFO String parameter is from 0 to 255 octets.

A M3UA *DATA* transfer message as defined in RFC 3332 contains the SS7 MTP3-User protocol data, which is an MTP-TRANSFER primitive, including the complete MTP3 Routing Label. The *DATA* message contains the following variable length parameters:
- Network Appearance: Optional
- Routing Context: Conditional
- Protocol Data: Mandatory
- Correlation Id: Optional

The equivalent message in the case of SUA, as defined in the IETF working drafts "Signalling Connecting Control Part User Adaptation Layer (SUA)" is a *CLDT* connectionless data transfer message which contains the following parameters:
- Routing Context: Mandatory
- Protocol Class: Mandatory
- Source Address: Mandatory
- Destination Address: Mandatory
- Sequence Control: Mandatory
- SS7 Hop Count: Optional
- Importance: Optional
- Message Priority: Optional
- Correlation ID: Optional
- Segmentation: Optional
- Data: Mandatory

In this embodiment, the parameters of the *DATA* message in the case of M3UA and the *CLDT* message in the case of SUA are supplemented with an optional INFO String parameter.

This enables protocols to be defmed, an example of which will be described below, which are based on messages embedded in the above-described SIGTRAN messages by means of the usage of INFO string field to transport supplementary information. By taking advantage of this extra information, the ASPs are provided with a wider range of criteria by which they can verify the authenticity of, or otherwise discriminate between, messages.

To defme the structure and the message exchanges, a new protocol, embedded in the SIGTRAN messages, is defined. This protocol, which will be referred to as SS7_INFO in this document, is implemented by 5 messages:

### SS7_INFO_REGISTER

The ASP sends this message to the SGP, in an *ASP-ACTIVE* SIGTRAN message, or in any *DATA* (or *CLDT* in the case of SUA) message. The message has two purposes; (i) to verify that the remote SGP is configured to use the *SS7_INFO* protocol; and (ii) to indicate to the SGP that this ASP could request, from the SGP, *SS7_INFO* information. The information requested is indicated inside this message.

This message is optional, and is used for dynamic registration. In other embodiments, SG 100 may also be configured in a static way, to send SS7 routing information in all *DATA* (or *CLDT)* messages for a specific ASP.

### SS7_INFO_REGISTER_ACK

This message is sent by the SGP to the ASP, in an *ASP-ACTIVE-ACK* SIGTRAN message or a *DATA* (or *CLDT)* message, in response to a received *SS7_INFO_REGISTER* message, to indicate that: (i) The SGP supports the *SS7_INFO* protocol; and (ii) To indicate which supplementary SS7 routing information the SGP is able to send within the *DATA* messages.

### SS7_INFO_DEREGISTER

The ASP sends this message to the SGP, in any *DATA* (or *CLDT)* message, to request that the SGP stop sending the SS7 routing information.

### SS7_INFO_DEREGISTER_ACK

This message is sent by the SGP to the ASP, in any *DATA* (or *CLDT)* message, in response to a received *SS7_INFO_DEREGISTER* message.

### SS7_INFO_DATA

This message is sent by the SGP to the ASP, in any *DATA* (or *CLDT)* message, with the SS7 routing information associated with this message.

As the INFO string field must contain only ASCII characters, the messages of the *SS7_INFO* protocol are based on ASCII only and an example ABNF grammar description is given below:

| | |
|---|---|
| *SS7_INFOMessage* = *SS7_INFOToken SLASH Version SEP messageBody* | |
| *messageBody* = *1*1 (SS7_InfoRegister* / | |
| | *SS7_InfoRegisterAck l* |
| | *SS7_InfoDeregister l* |
| | *SS7_InfoDeregisterAck* / |
| | *SS7_InfoData)* |
| | |
| *SS7_InfoRegister* = *SS7_InfoRegisterToken EQUAL LBRKT* | |
| *SS7_InfoRegisterParameters RBRKT* | |
| *SS7_InfoRegisterAck*=*SS7_InfoRegisterAckToken EQUAL BRKT* | |
| *SS7_InfoRegisterParameters RBRKT* | |
| *SS7_InfoData* = *SS7_InfoDataToken EQUAL LBRKT SS7_InfoDataParameters RBRKT* | |
| | |
| *SS7_InforegisterParameters* = *[SS7_ LinksetToken [COMMA]]* | |
| | *[SS7_SLCToken [COMMA]]* |
| | *[SS7_DPCToken [COMMA]]* |
| | *[SS7_OPCToken]* |
| | |
| *SS7_InfoDataParameters* = *[SS7_ LinksetToken EQUAL LINKSET_ID [COMMA]]* | |
| | *[SS7_SLCToken EQUAL SLC_ID [COMMA]* |
| | *[SS7_DPCToken EQUAL PC [COMMA]]* |
| | *[SS7_OPCToken EQUAL PC]* |
| | |
| *LINKSET_ID* | = *1*3 (DIGIT)* |
| *SLC_ID* | = *1*2 (DIGIT)* |
| *PC* | = *( 1*5 (DIGIT)* / |
| | *1*3 (DIGIT) EQUAL 1*3 (DIGIT) EQUAL 1*3 (DIGIT)*/ |
| | *1*8 (DIGIT)) ; itu-t l ansi* / *china format* |
| | |
| *Version* = *1*2(DIGIT) ; today, only version 1 is defined* | |
| | |
| *DIGIT* | = *%x30-39 ; 0-9* |
| *SLASH* | = *%x2F ;* "/" |
| *SP* | = *%x20 ; space* |
| *HTAB* | = *%x09 ; horizontal tab* |
| *CR* | = *%x0D ; Carriage return* |
| *LF* | = *%x0A ; linefeed* |
| *EOL* | = *(CR [LF]* / *LF)* |
| *WSP* | = *SP l HTAB ; white space* |
| *SEP* | = *( WSP* / *EOL)* |
| *LWSP* | = **(WSP* / *EOL)* |
| *LBRKT* | = *LWSP %x7B LWSP ; "{"* |
| *RBRKT* | = *LWSP %x7D LWSP ; "}"* |
| *COMMA* | = *LWSP %x2C LWSP ; ","* |
| *EQUAL* | = *LWSP %x3D LWSP ; "="* |
| | |
| *SS7_INFOToken* | = *("SS7_INFO")* |
| *SS7_InfoRegisterToken* | = *("REG")* |
| *SS7_InfoRegisterAckToken* | = *("RACK" l "RNAK")* |
| *SS7_InfoDeregisterToken* | = *("DEREG")* |
| *SS7_InfoDeregisterAckToken* | = *("DEACK" l "DENAK")* |
| *SS7_InfoDataToken* | = *("DATA")* |
| *SS7_LinksetToken* | = *("LKST")* |
| *SS7_SLCToken* | = *("SLC")* |
| *SS7_DPCToken* | = *("DPC")* |
| *SS7_OPCToken* | = *("OPC")* |

It will be appreciated that a decoder of such a grammar can be readily implemented with commonly available tools.

It will be apparent that in this example, 3 parameters may be requested by the ASP, that is the OPC Originating Point Code, DPC Destination Point Code and SLC Signalling Link Code and Linkset ID LKST.

In the following, an example will be given of behaviour for the system illustrated in Fig 1. Each component is assumed to be configured to make use of the *SS7_INFO* protocol.

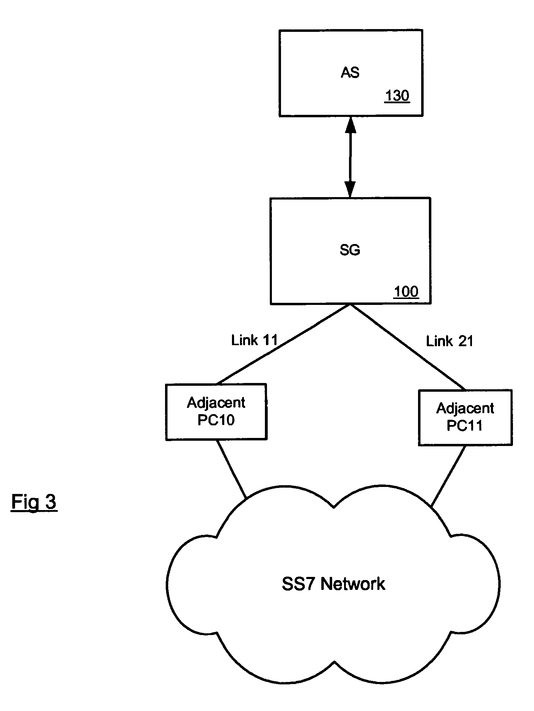

The exemplary SS7 topology shown in Fig 3 is as follows: The SG 100 is connected in associated mode to 2 adjacent nodes: PC 10 and PC 11. SG 100 contains 2 signalling links: link 11 and Link 21. SG 100 is connected to PC 10 by linkset 1 and to PC 11 by linkset 2. A linkset is a number of signalling links that directly interconnect two signalling points and which are used as a module - links within the linkset being selected by means of the SLS values in each message.

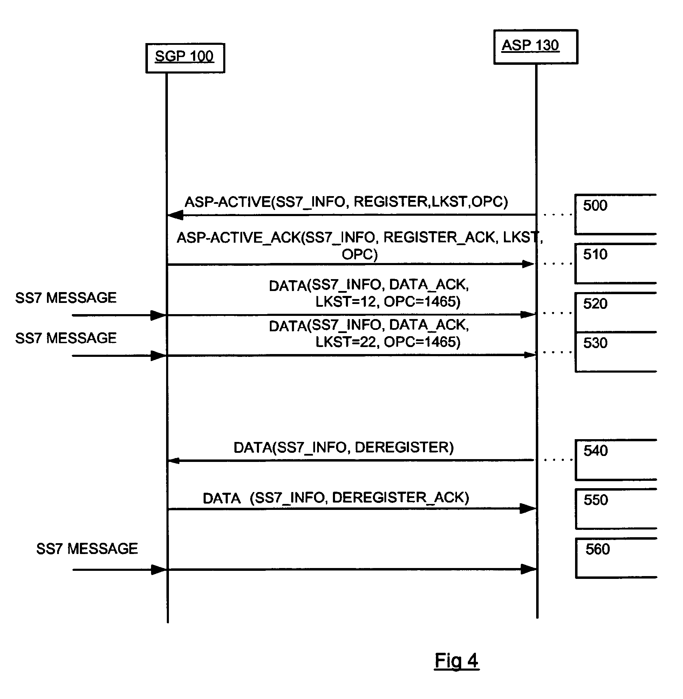

An exemplary sequence of events and signalling network management message exchanges is shown in Fig 4.

Initially, the AS 130 signals in conventional manner to the SG 100 that it is up using respective *ASP_UP* messages which are acknowledged by *ASP_UP_ACK*. This exchange is not shown in Fig 4.

The use of the *SS7_INFO* protocol to pass routing information between AS 130 and SG 100 will now be described in relation to steps 500 to 560 as follows.

Step 500: When AS 130 is able to handle traffic it informs SG 100 by sending an *ASP-ACTIVE* message in which a *SS7_INFO* message is embedded. The *SS7_INFO* message is formatted as follows:
SS7INFO/1 {REG, LKST, OPC}.

Which indicates that AS 130 is requesting that the linkset ID, ie the ID of the linkset upon which the message was received by SG100, and originating point code be communicated.

Step 510: SG 100 replies to ASP 130 using an *ASP-ACTIVE_ACK* message in which is embedded an *SS7_INFO_ACK* message. SG 100 has the *SS7_ INFO* capability, and thus it authorizes AS 130 to take advantage of this capability and it informs AS 130 that is able to supply the linkset ID and originating point code data for each message. The message is formatted as follow:
SS7_INFO/1 {REG_ACK, LKST, OPC}

Step 520: When an SS7 message is received by SG 100 it is transferred to AS 130 in the normal way, except that the INFO field of the DATA message contains the supplementary information requested by AS 130. In the example illustrated, the linkset ID is 12 and the OPC is 1465.

Step 530: A further SS7 message is received by SG 100 and is transferred to AS 130 with the INFO field of the DATA message containing the supplementary information requested by AS130. In this further message, the linkset ID is 22 and the OPC is 1465.

ASP 130 can thus distinguish between the message received from point code 1465 on linkset 12 in step 520 and the message received from point code 1465 on linkset 22 in step 530.

It is possible that the AS 130 knows that all bona fide messages received from OPC 1465 are to be received on linkset 22 and therefore AS 130 can use the supplementary information contained in the *SS7_INFO* message to determine that the message received in step 530 is not bone fide and should not be processed.

Step 540: In step 540, AS 130 sends an SS7_INFO DEREGISTER message to inform SG 100 to cease sending the supplementary information. This message in acknowledged in step 550 by and SS7_INFO DEREGISTER_ACK message. A subsequent message received in step 560 then does not contain the supplementary information.

The foregoing discussion is premised upon one of ordinary skill in the art having a working understanding of the character and format of switching signals in the SS7 network, as well as the character and nature of converting SS7 signals for transport across IP networks. For additional information regarding SS7 network switching over IP networks, reference may be made to the (IETF) working drafts "Signalling Connecting Control Part User Adaptation Layer (SUA)" available from the IETF website at www.ietf.org, and IETF RFC 3332 "SS7 MTP3 - User Adaptation Layer (M3UA)", available from the IETF website, and which is incorporated herein by reference as if reproduced in full. It is noted that each of these IETF documents is a work in progress and is therefore subject to change. However, these documents exemplify the changes necessary to a standard SS7 signalling system for its implementation in an IP network context. As well as defining the functions of signalling gateways and signalling gateway processes, the SIGTRAN documents referred to above specify in detail the protocols to be implemented between an SGP and an ASP.

More general background information regarding SIGTRAN protocols, reference may be made to the International Engineering Consortium, in document "SS7 Over IP Signalling Transport and SCTP," which is available from the IEC website www.iec.org, and which is incorporated herein by reference as if reproduced in full.

The above discussion is meant to be illustrative of the principles and various embodiments of the present invention. Numerous variations and modifications will become apparent to those skilled in the art once the above disclosure is fully appreciated. It is intended that the following claims be interpreted to embrace all such variations and modifications.

It will be appreciated that the present embodiments take the form of a set of computer programs intended for use with general purpose computing and signalling platforms and which may be marketed in the form of suitable computer program products including the functionality described. It will be appreciated that the invention may equally be implemented as special purpose hardware or any combination of software and hardware.

## Claims

1. A method for operating a signalling gateway process (100) of the type defined by the IETF SIGTRAN working group within a signalling gateway of the type defined by the IETF SIGTRAN working group, the method comprising determining, from an SS7 signalling message received by the signalling gateway, routing information comprising one or more parameters for enabling an application server process (130) of the type defined by the IETF SIGTRAN working group to discriminate the signalling message, the parameters being selected from the group: Originating Point Code, Destination Point Code, Signalling Link Code, or Linkset ID, **characterised by** making said routing information available to the application server process in an M3UA DATA message or an SUA CLDT message sent (520; 530) from the signalling gateway process (100) to the application server process (130) together with the signalling message payload.

2. A method as claimed in claim 1 including a registration step whereby an application server process (130) may select the parameters made available to it by the signalling gateway process (100).

3. A method as claimed in claim 1 or claim 2 wherein the routing parameters are exchanged within an INFO String parameter of otherwise standard SIGTRAN xUA transfer messages.

4. A method for operating a signalling system comprising a signalling gateway process and an application server process, the method comprising operating the signalling gateway process using a method as claimed in any of claims 1 to 3 and the application server process exploiting the parameters to verify the origin of the message.

5. A signalling gateway element arranged to carry out a method as claimed in any of claims 1 to 3.

6. A system for identifying unwanted short message service messages comprising: a signalling gateway as claimed in claim 5 having a facility for making routing information concerning the message available to an application server, and an application server having a discrimination element for using the routing information to determine whether the message is an unwanted message.

## Patentansprüche

1. Ein Verfahren zum Betreiben eines Signalisierungs-Gateway-Prozesses (100) des durch IETF-SIGTRAN-Arbeitsgruppe definierten Typs innerhalb eines Signalisierungs-Gateways des durch die IETF-SIGTRAN-Arbeitsgruppe definierten Typs, wobei das Verfahren ein Bestimmen, ausgehend von einer durch den Signalisierungs-Gateway empfangenen SS7-Signalisierungsnachricht, von Routinginformationen umfasst, die einen oder mehr Parameter umfassen, um zu ermöglichen, dass ein Anwendungsserverprozess (130) des durch die IETF-SIGTRAN-Arbeitsgruppe definierten Typs die Signalisierungsnachricht unterscheidet, wobei die Parameter aus der folgenden Gruppe ausgewählt sind: Ursprungspunktcode, Zielpunktcode, Signalverbindungscode oder LinkSet-ID, **dadurch gekennzeichnet, dass** die Routinginformationen dem Anwendungsserverprozess in einer M3UA-DATA-Nachricht oder einer SUA-CLDT-Nachricht zur Verfügung gestellt werden, die von dem Signalisierungs-Gateway-Prozess (100) zusammen mit der Signalisierungsnachrichtnutzlast an den Anwendungsserverprozess (130) gesendet (520; 530) werden.

2. Ein Verfahren gemäß Anspruch 1, das einen Registrierungsschritt umfasst, anhand dessen ein Anwendungsserverprozess (130) die Parameter, die ihm durch den Signalisierungs-Gateway-Prozess (100) zur Verfügung gestellt werden, auswählen kann.

3. Ein Verfahren gemäß Anspruch 1 oder Anspruch 2, bei dem die Routingparameter innerhalb eines INFO-String-Parameters von ansonsten standardmäßigen SIGTRAN-xUA-Transfernachrichten ausgetauscht werden.

4. Ein Verfahren zum Betreiben eines Signalisierungssystems, das einen Signalisierungs-Gateway-Prozess und einen Anwendungsserverprozess umfasst, wobei das Verfahren ein Betreiben des Signalisierungs-Gateway-Prozesses unter Verwendung eines Verfahrens gemäß einem der Ansprüche 1 bis 3, und des Anwendungsserverprozesses unter Ausnutzung der Parameter, um den Ursprung der Nachricht zu überprüfen, umfasst.

5. Ein Signalisierungs-Gateway-Element, das dahin gehend angeordnet ist, ein Verfahren gemäß einem der Ansprüche 1 bis 3 auszuführen.

6. Ein System zum Identifizieren von unerwünschten Kurzmitteilungsdienst-Nachrichten, das folgende Merkmale aufweist: einen Signalisierungs-Gateway gemäß Anspruch 5, der eine Einrichtung aufweist, um Routinginformationen bezüglich der Nachricht einem Anwendungsserver zur Verfügung zu stellen, und einen Anwendungsserver, der ein Unterscheidungselement zum Verwenden der Routinginformationen dafür aufweist, zu bestimmen, ob die Nachricht eine unerwünschte Nachricht ist.

## Revendications

1. Procédé pour exploiter un processus de passerelle de signalisation (100) du type défini par le groupe de travail IETF SIGTRAN à l'intérieur d'une passerelle de signalisation du type défini par le groupe de travail IETF SIGTRAN, le procédé comprenant la détermination, à partir d'un message de signalisation SS7 reçu par la passerelle de signalisation, d'informations de routage comprenant un ou plusieurs paramètres pour permettre à un processus de serveur d'applications (130) du type défini par le groupe de travail IETF SIGTRAN de discriminer le message de signalisation, les paramètres étant sélectionnés dans le groupe : code de point d'origine, code de point de destination, code de liaison de signalisation, ou ID d'ensemble de liaisons, **caractérisé par** la mise à disposition desdites informations de routage pour le processus de serveur d'applications dans un message DATA M3UA ou un message CLDT SUA envoyé (520 ; 530) du processus de passerelle de signalisation (100) au processus de serveur d'applications (130) conjointement avec la charge utile du message de signalisation.

2. Procédé selon la revendication 1, incluant une étape d'enregistrement par laquelle un processus de serveur d'applications (130) peut sélectionner les paramètres qui sont mis à sa disposition par le processus de passerelle de signalisation (100).

3. Procédé selon la revendication 1 ou la revendication 2, dans lequel les paramètres de routage sont échangés à l'intérieur d'un paramètre INFO String (Chaîne d'INFO) de messages de transfert SIGTRAN xUA autrement standard.

4. Procédé pour exploiter un système de signalisation comprenant un processus de passerelle de signalisation et un processus de serveur d'applications, le procédé comprenant l'exploitation du processus de passerelle de signalisation en utilisant un procédé selon l'une quelconque des revendications 1 à 3 et le processus de serveur d'applications en exploitant les paramètres pour vérifier l'origine du message.

5. Élément de passerelle de signalisation agencé pour exécuter un procédé selon l'une quelconque des revendications 1 à 3.

6. Système pour identifier des messages SMS (service de messages courts) indésirables comprenant : une passerelle de signalisation selon la revendication 5 ayant une fonction pour mettre des informations de routage concernant le message à la disposition d'un serveur d'applications, et un serveur d'applications ayant un élément de discrimination pour utiliser les informations de routage afin de déterminer si le message est un message indésirable.
